# EUROPÄISCHE PATENTSCHRIFT

(11) **EP 2 843 279 B1**
(45) Veröffentlichungstag und Bekanntmachung des Hinweises auf die Patenterteilung: **09.11.2016**
(21) Anmeldenummer: 14175875.5
(22) Anmeldetag: 04.07.2014
(51) Int. Cl.: F16K 35/02, F16K 7/14

(54) **Absperrorgan**
Blocking device
Organe d'arrêt

(30) Priorität: 26.08.2013 DE 102013216956
(43) Veröffentlichungstag der Anmeldung: 04.03.2015
(73) Patentinhaber: Gemü Gebr. Müller Apparatebau GmbH & Co. Kommanditgesellschaft, 74653 Ingelfingen (DE)
(72) Erfinder: Föhn, Rene, 5630 Muri (CH)
(74) Vertreter: DREISS Patentanwälte PartG mbB

(56) Entgegenhaltungen:
- EP-A1- 0 897 076
- DE-A1- 2 124 485
- DE-A1-102011 080 139
- GB-A- 941 758
- GB-A- 1 593 890
- US-A- 4 015 627

## Beschreibung

Die Erfindung betrifft ein Absperrorgan nach dem Oberbegriff des Anspruchs 1.

Sogenannte Membranventile, bei denen ein Antriebsbereich mittels einer Membran von einem fluidführenden Bereich abgetrennt wird, sind bekannt.

So zeigt die DE 10 2011 080 139 A1 ein Membranventil für fluide Medien. Ein Verbindungsstück ist durch einen Antrieb betätigbar und zur Beaufschlagung der Membran ausgebildet. Ein Bereich des Verbindungsstücks weist Rastzapfen zur Befestigung des Verbindungsstücks am Antrieb auf. Die Rastzapfen sind axial geschlitzt und als Hohlzapfen ausgebildet, sodass der Rastzapfen wenigstens zwei axiale Finger mit der radial abragenden Rastnase aufweist.

Aus der EP 0 897 076 A1 ist ein Membranventil bekannt, bei dem ein Membranhalter unabhängig von der Position einer Druckspindel einbau- bzw. austauschbar ist. Zur Kupplung der Druckspindel mit dem Membranhalter ist eine Ausnehmung im Membranhalter vorgesehen, so dass ein freies Ende der Druckspindel zur Bildung einer Nut/Federverbindung seitlich in eine Nut eingesetzt werden kann. Anschließend wird durch ein Überstülpen des Druckstücks die radiale Verschiebung des Membranhalters verriegelt.

Aus der DE 10 2008 045 857 A1 ist ein Membranventil bekannt, bei dem ein Ventilkörper, eine Dichtmembran und ein Verbindungsstück fest miteinander zu einer abgedichteten und einem Antrieb verbindbaren Ventilkörpereinheit verbunden sind.

Die US 4 015 627 A offenbart ein Druckentlastungsventil, das in eine vollständig geöffnete Position bewegbar ist. Kugeln sind so proportioniert, dass diese in einen Rücksprung hineinragen, um eine Spindel in Bezug zu einem Gehäuse festzulegen.

Aus der GB 941 758 A ist ein Kolbenschieber für eine Saugleitung bekannt, der einen quer zur Saugleitung zwischen zwei Endstellungen beweglichen Schieberkolben umfasst. Der Schieberkolben ist in Richtung zu der einen Endstellung belastet. Des Weiteren ist eine Vorrichtung vorgesehen, welche den Kolben in der anderen Endstellung entgegen der Wirkung der Belastung festhalten kann.

Aus der GB 1 593 890 A ist Sicherheitsabsperrventil bekannt, bei welchem mehrere Organe, wie etwa ein Auslösemechanismus, ein Stellantrieb, ein Ventilteller eines Stellgliedes sowie ggf. eine Kontrolleinrichtung zu einer Funktionseinheit im Gehäuse zusammengefasst sind. Eine Kraft einer Schließfeder wirkt auf einen Auslösemechanismus. Der Auslösemechanismus besteht im Wesentlichen aus einer Schaltstange, an deren oberem Ende der Ventilteller und in deren Mittelbereich mit axialem Abstand eine Führungsbuchse sowie eine Schaltbuchse angeordnet sind.

Das der Erfindung zu Grunde liegende Problem wird durch ein Absperrorgan nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale in Alleinstellung als auch in unterschiedlichen Kombinationen für die Erfindung wichtig sein können, ohne dass hierauf nochmals explizit hingewiesen wird.

Dadurch, dass ein Verriegelungsglied einen Außendurchmesserrücksprung aufweist, der derart ausgestaltet ist, so dass ein Verschlusselement mittels mit dem Außendurchmesserrücksprung orthogonal zu einer Zustellachse zuführbarer Verriegelungsschieber verriegelbar ist, wird ein bauraumsparender Verriegelungsmechanismus geschaffen und gleichzeitig die Verriegelung der Verschlusselements vorteilhaft vereinfacht.

In einer vorteilhaften Weiterbildung des Verschlusselements wird dadurch, dass in einem Öffnungszustand des Absperrorgans eine Bewegung eines Druckstücks des Absperrorgans von einem Ventilsitz des Absperrorgans weg über das Verriegelungsglied auf die Membran übertragbar ist, ein Außendurchmesserrücksprung des Verschlusselements geschaffen, der ein einfaches Ablösen der Membran vom Ventilsitz ermöglicht.

In einer vorteilhaften Weiterbildung des Verschlusselements ist der Außendurchmesserrücksprung derart ausgebildet, so dass in einem Schließzustand des Absperrorgans eine Bewegung des Druckstücks des Absperrorgans hin zu dem Ventilsitz des Absperrorgans im Wesentlichen nicht über das Verriegelungsglied auf die Membran übertragbar ist. Das Verriegelungsglied wird damit während des Anpressens der Membran auf den Ventilsitz mittels des Druckstücks keiner Belastung ausgesetzt, was vorteilhaft dazu genutzt werden kann, den Verriegelungsmechanismus kleiner auszugestalten. Dadurch kann vorteilhaft zum einen Bauraum eingespart werden, zum anderen wird einer Beschädigung oder Zerstörung des Verschlusselements vorgebeugt.

In einer weiteren vorteilhaften Ausführungsform des Verschlusselements weist der Außendurchmesserrücksprung zwei Anschlagbereiche für die Verriegelungsschieber auf, die derart voneinander beabstandet sind, so dass in einem Verriegelungszustand das Verschlusselement und das Druckstück entlang einer Zustellachse zueinander bewegbar sind. Dadurch kann das Druckstück auf die Membran drücken, ohne das Verschlusselement zu belasten.

In einer weiteren vorteilhaften Ausführungsform weist der Außendurchmesserrücksprung einen Innenführungsbereich auf, der derart ausgestaltet ist, dass in einem Verriegelungszustand das Verschlusselement und das Druckstück entlang einer Zustellachse zueinander bewegbar sind. Durch den Innenführungsbereich lässt sich vorteilhaft erreichen, dass die Verriegelungsschieber zu einer Zentrierung des Verschlusselements genutzt werden können, wobei gleichzeitig die Bewegbarkeit des Druckstücks und des Verschlusselements zueinander gewährleistet ist.

In einer vorteilhaften Ausführungsform des Verschlusselements weist das Verriegelungsglied zwei voneinander beabstandete Ausführungsbereiche auf, die einen im Wesentlichen gleichen Außendurchmesser aufweisen. Durch die Beabstandung der Außenführungsbereiche wird vorteilhaft eine Führung in einem zylindrischen Aufnahmeraum für das Verriegelungsglied im Druckstück verbessert.

In einer vorteilhaften Weiterbildung ist der Außendurchmesserrücksprung zwischen den zwei Führungsbereichen angeordnet. Damit wird vorteilhaft eine Führung benachbart zu der Verriegelung ausgeführt, was wiederum vorteilhaft für die kleine Ausgestaltung des Verriegelungsmechanismus nutzbar ist und die Führung des Verriegelungsglieds verbessert.

In einer vorteilhaften Ausführungsform des Verschlusselements ist der Außendurchmesserrücksprung derart von der Membran beabstandet, dass die Verriegelungsschieber in einem Anpressbereich des Druckstücks abgewandten Verriegelungsbereich des Druckstücks von radial außen mittels einer zumindest abschnittsweise über das Druckstück führbaren Kupplungsbuchse in eine in den Außendurchmesserrücksprung eingreifende Verriegelungsstellung verlagerbar sind. Vorteilhaft kann damit der Anpressbereich des Druckstücks von dem Verriegelungsbereich des Druckstücks beabstandet werden, wodurch bspw. zum einen der Verriegelungsbereich unabhängig vom Anpressbereich des Druckstücks ausgestaltet werden kann.

Vorteilhaft ist in einer weiteren Ausführungsform des Verschlusselements der Außendurchmesserrücksprung umlaufend nicht unterbrochen. Damit kann das Verschlusselement vorteilhaft ohne Rücksichtnahme auf die Anordnung der Verriegelungsschieber montiert werden und ein Eingriff der Verriegelungsschieber zur Verriegelung kann stets garantiert werden.

Dadurch, dass das Verriegelungsglied aus einem im Wesentlichen nicht verformbaren Material ist, kann in einer weiteren vorteilhaften Ausführungsform des Verschlusselements eine sichere Verriegelung des Verschlusselements garantiert werden.

Das Absperrorgan weist Verriegelungsschieber in dem Druckstück auf, die mittels einer das Druckstück umgreifende Kupplungsbuchse in eine das Verriegelungsglied ergreifende Verriegelungsstellung verlagerbar sind. Die Kupplungsbuchse vereinfacht damit vorteilhaft die sichere und schnelle Verriegelung des Verschlusselements.

In einer vorteilhaften Ausführungsform des Absperrorgans sind die Verriegelungsschieber jeweils mittels eines an dem Druckstück angreifenden Federelements in eine das Verriegelungsglied freigebende Verriegelungsstellung verlagerbar. Damit kann die Entriegelungsstellung selbst bei einem geneigten Absperrorgan unabhängig von einer auf das Absperrorgan wirkenden Gewichtskraft erreicht werden.

In einer vorteilhaften Ausführungsform des Absperrorgans ist die das Druckstück umgreifende Kupplungsbuchse während eines Betriebes des Absperrorgans mittels eines an dem Zwischenstück des Absperrorgans angreifenden Federelements zu dem Druckstück festgelegt. Die Kupplungsbuchse überdeckt während des Betriebs des Absperrorgans einen Außenmantel des Druckstücks im Bereich der Verriegelungsschieber. Damit kann auf einfache Art und Weise eine Verriegelung des Verschlusselements erreicht werden.

In einer vorteilhaften Weiterbildung ist die das Druckstück umgreifende Kupplungsbuchse während einer Montage des Verschlusselements mittels einer Arretiervorrichtung zu dem Zwischenstück festgelegt. Die Kupplungsbuchse gibt während der Montage den Außenmantel des Druckstücks im Bereich der Verriegelungsschieber frei. Die Kupplungsbuchse sorgt damit während der Montage dafür, dass das Verschlusselement auf einfache Art und Weise von dem Druckstück entfernbar ist.

In einer vorteilhaften Ausführungsform sind ein distales Ende des Verriegelungsglieds, eine Innenfläche der Kupplungsbuchse und eine Lagerung für die Verriegelungsschieber derart aufeinander abgestimmt, so dass die Verriegelungsschieber bei zum Zwischenstück festgelegter Kupplungsbuchse, bei einer zum Zwischenstück festgelegter Membran des Verschlusselements und bei in Zustellrichtung bewegten Druckstück vor einem Berühren des distalen Endes des Verriegelungsgliedes die Verriegelungsschieber sich aus einem Innenraum des Druckstücks zurückziehen und gleichzeitig und/oder nachfolgend in einen Außenraum des Druckstücks eintauchen. Mittels dieser Ausführungsform des Absperrorgans kann das Absperrorgan kompakt ausgeführt werden, wobei eine Beschädigung oder gar Zerstörung der Verriegelungsglieder bzw. mit den Verriegelungsgliedern zusammenwirkender Elemente verhindert werden.

In einer weiteren Ausführungsform des Absperrorgans sind die Verriegelungsschieber orthogonal zur Zustellachse in dem Druckstück verliersicher gelagert, wobei jeweils einer der Verriegelungsschieber orthogonal zur Zustellachse größer ist als eine Mantelstärke des Druckstücks im Bereich des jeweiligen Verriegelungsschiebers. Diese Ausführungsform trägt ebenfalls zu einer kompakten Ausgestaltung bei.

In einer vorteilhaften Weiterbildung des Absperrorgans weisen die Verriegelungsschieber jeweils abgerundete Enden auf. Anschlagbereiche des Außendurchmesserrücksprungs des Verriegelungsglieds für das erste Ende des jeweiligen Verriegelungsschiebers entsprechen nach innen zulaufenden Kegelstumpfaußenflächen. Ein Einlaufbereich der Kupplungsbuchse für das zweite Ende des jeweiligen Verriegelungsschiebers entspricht einer entgegen der Zustellrichtung zulaufenden Kegelstumpfmantelinnenfläche. Dadurch wird einer Zerstörung bzw. Abkantung und damit einer Beeinträchtigung der Funktion der Verriegelungsschieber vorgebeugt. Auch die Anschläge erreichen damit eine verschleißarme Ausgestaltung. Die Ausgestaltung des Einlaufbereichs der Kupplungsbuchse garantiert ein sicheres Verriegeln des Verschlusselements.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen auch die gleichen Bezugszeichen verwendet.

Nachfolgend werden beispielhafte Ausführungsformen der Erfindung unter Bezugnahme auf die Zeichnung erläutert. In der Zeichnung zeigen:
- Figur 1: eine perspektivische Darstellung eines Verschlusselements;
- Figur 2: eine schematische Schnittdarstellung des Verschlusselements;
- Figur 3: eine schematische Seiten-/Schnittansicht eines Absperrorgans;
- Figur 4: einen Ausschnitt aus Figur 3;
- Figur 5: eine schematische Schnittansicht eines Druckstücks;
- Figur 6: eine schematische Schnittansicht eines Teils des Absperrorgans in einem Schließzustand;
- Figur 7: eine schematische Schnittansicht des Teils des Absperrorgans in einem Öffnungszustand;
- Figur 8: eine schematische Schnittansicht des Teils des Absperrorgans in einem Entriegelungszustands; und
- Figur 9: eine schematisch Schnittansicht betreffend einen Montageschritt für das Verschlusselement.

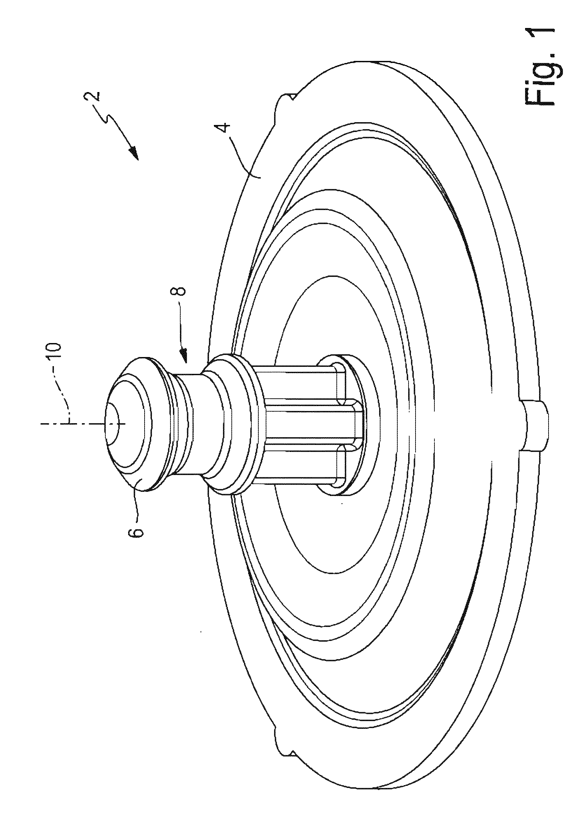

Figur 1 zeigt eine perspektivische Ansicht auf ein Verschlusselement 2 für ein Absperrorgan für Fluide. Das Verschlusselement 2 umfasst eine Membran 4 und ein von der Membran 4 abragendes Verriegelungsglied 6. Das Verriegelungsglied 6 ist mittig zu der Membran 4 angeordnet. Das Verriegelungsglied 6 weist einen Außendurchmesserrücksprung 8 auf. Das Verriegelungsglied 6 besteht aus einem im Wesentlichen nicht verformbaren Material, bspw. einem Metall, einer Metalllegierung oder einem Thermoplast. Insbesondere ist das Verriegelungsglied 6 bei einer Betriebstemperatur des Absperrorgans im Wesentlichen nicht verformbar. Demgegenüber ist die Membran 4 aus einem Material, das bei einer Betriebstemperatur des Absperrorgans im Wesentlichen verformbar ist, um die Membran 4 entlang einer Zustellachse 10 zu bewegen. Die Membran 4 ist zu einem Zusammenwirken mit einem Ventilkörper des Absperrorgans ausgebildet.

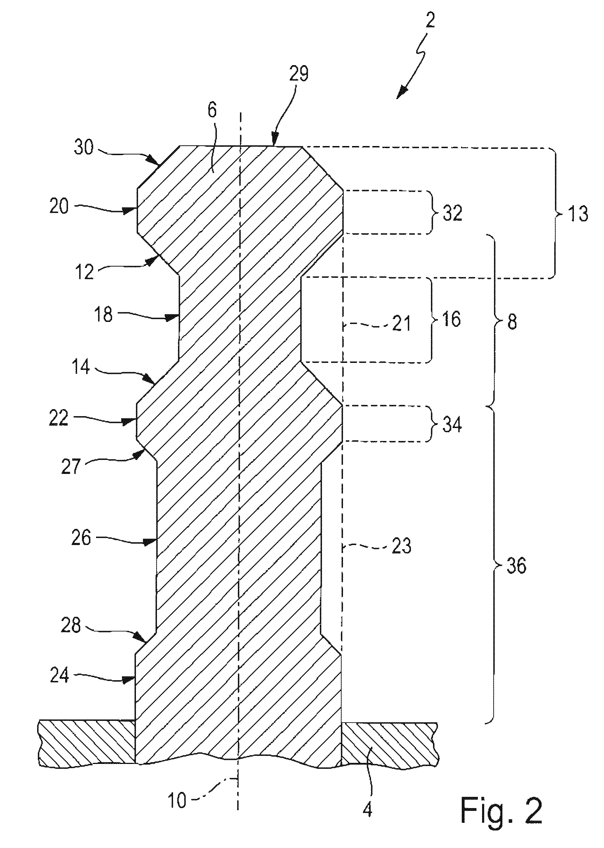

Figur 2 zeigt eine schematische Schnittansicht durch einen Teil des Verschlusselements 2, insbesondere durch das abragende Verriegelungsglied 6. Figur 2 zeigt auch, dass das Verriegelungsglied 6 in der Membran 4 angeordnet ist, bspw. mit der Membran 4 vergossen ist. Der Außendurchmesserrücksprung 8 weist einen ersten Anschlagbereich 12 hin zu einem distalen Ende 13 des Verriegelungsgliedes 6 auf. Der Außendurchmesserrücksprung 8 weist einen zweiten Anschlagbereich 14 hin zu der Membran 4 auf. Der Anschlagbereich 12 und 14 sind über eine Distanz 16 voneinander beabstandet und damit derart voneinander beabstandet, so dass in einem Verriegelungszustand das Verschlusselement 6 und ein nachfolgend erläutertes Druckstück entlang der Zustellachse 10 zueinander bewegbar sind. Die Anschlagbereiche 12 und 14 des Außendurchmesserrücksprungs 8 des Verriegelungsglieds 6 entsprechen Kegelstumpfaußenflächen, die aufeinander zulaufen.

Der Außendurchmesserrücksprung 8 weist einen Innenführungsbereich 18 auf, der im Wesentlichen einer Zylindermantelaußenfläche entspricht, die parallel zu der Zustellachse 10 ausgerichtet ist. Des Weiteren ist das Verschlusselement 10 im Wesentlichen rotationssymmetrisch zur Zustellachse 10 ausgebildet. Nachgehend näher erläuterte Verriegelungsschieber sind in eine Verriegelungsstellung verlagerbar, in der die Verriegelungsschieber den Innenführungsbereich 18 radial von außen angreifen. Damit wird das Verriegelungsglied 6 mittels der Verriegelungsschieber zentriert, d.h. entlang der Zustellachse 10 gelagert. Damit ist der Innenführungsbereich 18 derart ausgestaltet, dass in dem Verriegelungszustand das Verschlusselement 2 und das Druckstück entlang der Zustellachse 10 zueinander bewegbar sind. Der Außendurchmesserrücksprung 8 wird umlaufend, d.h. entlang einer Umfangslinie, nicht unterbrochen. Der Außendurchmesserrücksprung 8 ist damit zur Aufnahme der Verriegelungsschieber in ihrer Verriegelungsstellung vorgesehen. Das Verriegelungsglied 6 weist im Bereich des distalen Endes 13 einen ersten Außenführungsbereich 20 auf. Ein zweiter Außenführungsbereich 22 schließt sich ausgehend von dem ersten Außenführungsbereich 20 an den Außendurchmesserrücksprung 8 hin zur Membran 4 an. Ein dritter Führungsbereich 24 schließt sich hin zur Membran 4 an einen Abstandsbereich 26 an. Die Außenführungsbereiche 20, 22 und 24 weisen im Wesentlichen den gleichen Durchmesser auf, wie mit den gestrichelten Linien 21 und 23 angedeutet ist. Insbesondere ist der Außendurchmesserrücksprung 8 zwischen dem ersten Führungsbereich 20 und dem zweiten Führungsbereich 22 angeordnet. Die Außenführungsbereiche 20, 22 und 24 entsprechen im Wesentlichen Zylindermantelaußenflächen.

Der Abstandsbereich 26 verjüngt sich bezüglich der jeweiligen Außenfläche der Außenführungsbereiche 22 und 24 mittels der jeweils zum Abstandsbereich 26 hin zulaufenden Kegelstumpfmantelaußenflächen 27 und 28.

Das distale Ende 13 weist des Weiteren eine Abschlussfläche 29 und einen Einlaufbereich 30 auf. Die Außenführungsbereiche 20 und 22 sind in Zustellrichtung bzw. parallel zur Zustellachse 10 im Wesentlichen gleich groß und weisen jeweils im Wesentlichen gleiche Höhen 32 und 34 auf. Der Außendurchmesserrücksprung 8 ist über eine Distanz 36 von der Membran 4 beabstandet.

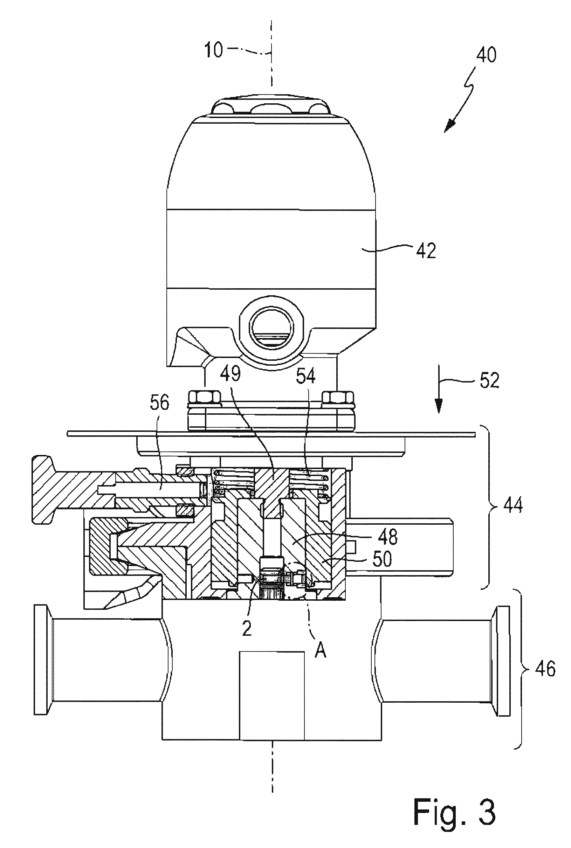

Figur 3 zeigt eine schematische Seiten-/Schnittansicht des Absperrorgans 40. Das Absperrorgan 40 umfasst einen nicht näher erläuterten Antriebsbereich 42, der auch als Antrieb bezeichnet wird, ein Zwischenstück 44 und einen Ventilkörper 46. In dem Zwischenstück 44 befindet sich das vom Antrieb angetriebene Druckstück 48, wobei das Druckstück 48 hierzu über eine Antriebsstange 49 mit dem Antrieb 42 verbunden ist. Das Druckstück 48 bewegt das mit dem Ventilkörper 46 zusammenwirkende Verschlusselement 2. Das Verschlusselement 2 weist das in Richtung des Antriebs 42 abragende Verriegelungsglied 6 auf. In Figur 3 ist lediglich ein Teil des Verriegelungsglieds 6 zu sehen. In Richtung des Ventilkörpers 46 wirkt die Membran 4 des Verschlusselements mit einem Ventilsitz des Ventilkörpers 46 zusammen.

Das Druckstück 48 wird von einer Kupplungsbuchse 50 umgriffen. Die Kupplungsbuchse 50 wird in einer Zustellrichtung 52 auf den Ventilsitz hin mittels eines an dem Zwischenstück 44 des Absperrorgans 40 angreifenden Federelements 54 auf das Druckstück 48 gedrückt.

Im Bereich eines Ausschnitts A befindet sich in der Schnittansicht ein Verriegelungsschieber, der sich in einer Verriegelungsstellung befindet. Die Verriegelungsstellung des Verriegelungsschiebers ist mittels der das Druckstück 48 umgreifenden Kupplungsbuchse 50 herstellbar. In der Schnittansicht der Figur 3 ist nur ein Verriegelungsschieber gezeigt. Das Absperrorgan 40 umfasst jedoch zumindest zwei Verriegelungsschieber um das Verriegelungsglied 6 zu ergreifen. Bevorzugt sind in einer Ebene orthogonal zur Zustellachse 10 drei Verriegelungsschieber in dem Druckstück 48 angeordnet, wobei die drei Verriegelungsschieber in Umfangsrichtung äquidistant beabstandet sind, d.h. es befinden sich jeweils gleiche Winkel zwischen zwei benachbarten Verriegelungsschiebern. Des Weiteren weist das Zwischenstück 44 eine orthogonal zur Zustellachse 10 verschiebliche Stange 56 auf, die allgemein auch als Arretiervorrichtung bezeichenbar ist. Mittels der Stange 56 lässt sich die Kupplungsbuchse 50 zum Zwischenstück 44 festlegen.

Damit weist das Druckstück 48 wenigstens zwei Verriegelungsschieber auf, die mittels der das Druckstück 48 umgreifenden Kupplungsbuchse 50 in eine das Verriegelungsglied 6 ergreifende Verriegelungsstellung verlagerbar sind.

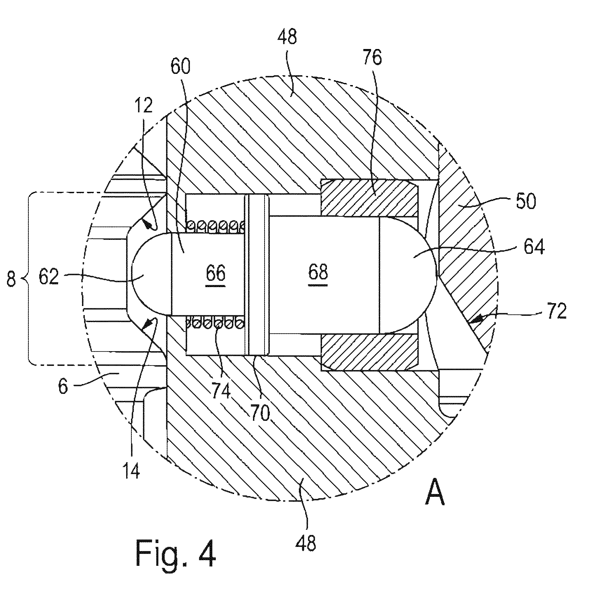

Das Absperrorgan 40 ist insbesondere derart ausgebildet, dass sowohl der Ventilkörper 46 als auch das Verschlusselement 2, d.h. alle medienberührten Teile des Absperrorgans 40, auf einfache Art und Weise austauschbar sind. Daher ist das Absperrorgan 40 auch als Single-Use Absperrorgan bezeichenbar. Figur 4 zeigt den Ausschnitt A aus Figur 3. Der Verriegelungsschieber 60 befindet sich in der das Verriegelungsglied 6 verriegelnden Verriegelungsstellung. Der Verriegelungsschieber 60 ist derart in dem Druckstück 48 aufgenommen, dass der Verriegelungsschieber 60 im Wesentlichen orthogonal zur Zustellachse 10 bewegbar ist. Der Verriegelungsschieber 60 weist ein erstes abgerundetes Ende 62 und ein zweites abgerundetes Ende 64 auf. An die Enden 62 und 64 schließt sich jeweils eine Zylindermantelaußenfläche 66 und 68 an. Zwischen den Zylindermantelaußenflächen 66 und 68 befindet sich ein ringförmiger Außendurchmessersvorsprung 70. Der Anschlagbereich 12 des Verriegelungsgliedes 6 ist für das erste Ende 62 des Verriegelungsschiebers 60 vorgesehen. Ein Einlaufbereich 72 der Kupplungsbuchse 50 ist für das zweite Ende 64 des Verriegelungsschiebers 60 vorgesehen. Der Einlaufbereich 72 der Kupplungsbuchse 50 entspricht im Wesentlichen einer entgegen der Zustellrichtung 52 zulaufenden Kegelstumpfmantelinnenfläche.

Orthogonal zur Zustellachse 10 ist der Verriegelungsschieber 60 verliersicher gelagert. Ein Federelement 74 ist zwischen dem Druckstück 48 und dem ringförmigen Außendurchmesservorsprung 70 derart angeordnet, dass der Verriegelungsschieber 60 stets mit einer Kraft beaufschlagt wird, die bzgl. der Zustellachse 10 radial nach außen wirkt, um bei einem freigegebenen zweiten Ende 64 den Verriegelungsschieber 60 in eine Entriegelungsstellung zu verlagern. Der Verriegelungsschieber 60 ist orthogonal zu Zustellachse 10 größer als eine Mantelstärke des Druckstücks 48 im Bereich des Verriegelungsschiebers 60. Mittels eines mit einer Presspassung in das Druckstück 48 eingebrachten Ringkörpers 76 wird der Verriegelungsschieber 60 verliersicher in dem Druckstück 48 gelagert. Der Außendurchmesserrücksprung 8 des Verriegelungsgliedes 6 ist derart ausgestaltet, so dass das Verschlusselement 2 mittels der dem Außendurchmesserrücksprung 8 im Wesentlichen orthogonal zu der Zustellachse 10 zuführbaren Verriegelungsschiebern 60 verriegelbar ist.

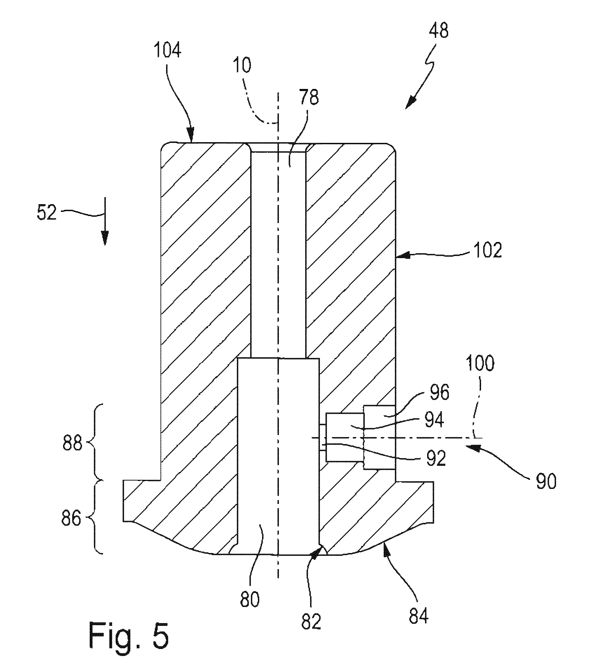

Figur 5 zeigt in schematischer Schnittansicht das Druckstück 48, das im Wesentlichen rotationssymmetrisch zur Zustellachse 10 ausgebildet ist. Eine erste zylindrische Ausnehmung 78 ist zur Aufnahme der Antriebsstange 49 vorgesehen. Die Antriebsstange 49 kann bspw. mittels einer Presspassung zu dem Druckstück 48 festgelegt werden. Eine zweite im Wesentlichen zylindrische Ausnehmung 80 ist zu Aufnahme des Verriegelungsglieds 6 des Verschlusselements 2 vorgesehen. Die Ausnehmung 80 umfasst einen Einlaufbereich 82, der beispielsweise kegelstumpfinnenflächenförmig ausgebildet sein kann. Radial nach außen schließt sich an den Einlaufbereich 82 ein Anpressbereich 84 an. Der Anpressbereich 84 ist dazu vorgesehen, die Membran 4 hin auf den Ventilsitz zu bewegen und an den Ventilsitz anzupressen. Der Anpressbereich 84 ist Teil eines pilzkopfförmigen Bereichs 86. Entgegen der Zustellrichtung 52 schließt sich an den Bereich 86 ein Verriegelungsbereich 88 an. Der Verriegelungsbereich 88 umfasst einen Durchgang 90 zur Aufnahme des Verriegelungsschiebers 60. Entsprechend der Anzahl der Verriegelungsschieber 60 umfasst das Druckstück 48 entsprechend weitere Durchgänge 90. Das erste Ende 62 des Verriegelungsschiebers 60 wird durch die zylinderinnenflächenförmige Öffnung 92 geführt. Eine zylinderinnenflächenförmige Ausnehmung 94 dient zur Führung und Aufnahme des ringförmigen Außendurchmesservorsprungs 70. Eine zylinderinnenflächenförmige Ausnehmung 96 dient zur Aufnahme des Ringkörpers 76 mittels einer Presspassung. Selbstverständlich sind auch andere Möglichkeiten zur verliersicheren Führung des Verriegelungsschiebers entlang einer Verlagerungsachse 100 möglich. Die Verlagerungsachse 100 verläuft orthogonal zur Zustellachse 10.

Ausgehend von dem Bereich 86 verjüngt sich das Druckstück 48 entgegen der Zustellrichtung 52 und weist eine im Wesentlichen zylindrische Mantelfläche 102 auf, über die zumindest abschnittsweise die Kupplungsbuchse 50 führbar ist. Die Kupplungsbuchse 50 ist bis zu dem Verriegelungsbereich 88 bzw. über diesen hinaus führbar, um den bzw. die Verriegelungsschieber 60 in dem dem Anpressbereich 84 des Druckstücks 48 abgewandten Verriegelungsbereich 88 von radial außen in eine in den Außendurchmesserrücksprung 8 eingreifende Verriegelungsstellung zu verlagern. Zu dieser Verlagerung ist der Außendurchmesserrücksprung 8 von der Membran 4 beabstandet, um entlang der Zustellachse 10 in die Ausnehmung 80 bis zu der Öffnung 92 führbar zu sein. Mittels der Mantelfläche 102 kann das Druckstück 48 entgegen der Zustellrichtung 52 in die Kupplungsbuchse 50 eintauchen.

Entgegen der Zustellrichtung 52 weist das Druckstück 48 einen Anschlagbereich 104 für die Kupplungsbuchse 50 auf. Die Kupplungsbuchse 50 kann mittels des Federelements 54 in Zustellrichtung 52 an dem Anschlagbereich 124 anliegen und damit kann mittels des Federelements 54 und des Anschlagbereichs 104 die Kupplungsbuchse 50 auch bei einer Bewegung der Antriebsstange 49 zu dem Druckstück 48 festgelegt werden.

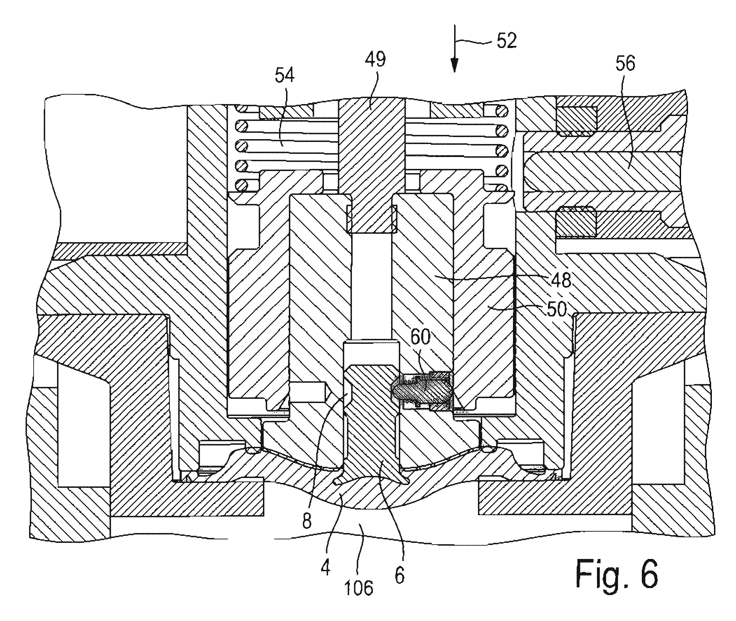

Figur 6 zeigt einen Teil des Absperrorgans 40 in einem Schließzustand. In einem Bereich 106, der nicht näher dargestellt ist, drückt die Membran 4 des Verschlusselements 2 auf den Ventilsitz und verschließt damit das Absperrorgan. Hierzu wird über die Antriebsstange 49 das Druckstück 48 in der Zustellrichtung 52 kraftbeaufschlagt. Über den Anpressbereich 84 drückt das Druckstück 48 entsprechend der Kraftbeaufschlagung auf die Membran 4. Die Membran 4 umfasst ein flexibles Material, weshalb die Membran 4 ihre Dicke entlang bzw. parallel zur Zustellachse 10 verringert. Die Verriegelungselemente 60 sind dem Außendurchmesserrücksprung 8 zugeführt und befinden sich daher in dem Verriegelungszustand. Wie in Figur 6 gezeigt, greift das erste Ende 62 des Verriegelungsschiebers 60 zwar in den Außendurchmesserrücksprung 8, liegt jedoch nicht an einem der beiden Anschlagbereiche 12 oder 14 an. Die Distanz 16 sorgt damit dafür, dass in dem Schließzustand des Absperrorgans 40 eine Bewegung des Druckstücks 48 hin zu dem Ventilsitz des Absperrorgans 2 im Wesentlichen nicht über das Verriegelungsglied 6 auf die Membran 4 übertragbar ist.

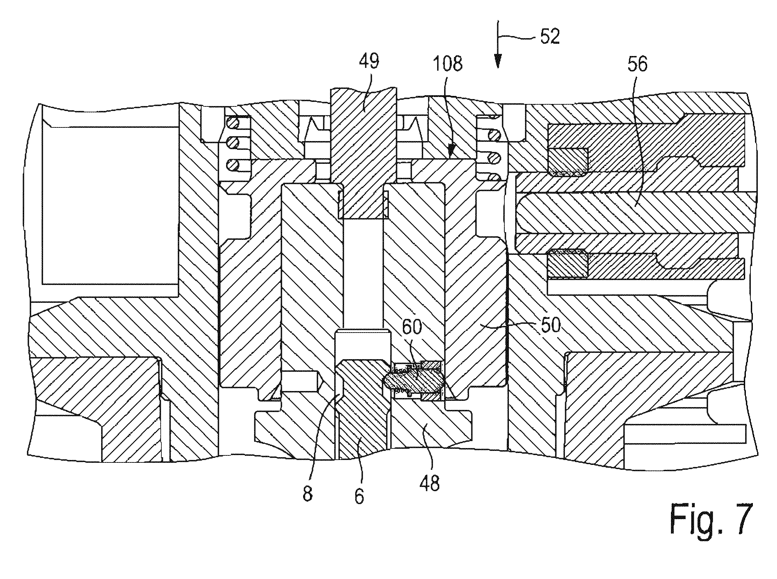

Der in Figur 6 gezeigte Schließzustand und der nachfolgend in Figur 7 gezeigte Öffnungszustand entspricht einem Betreib des Absperrorgans 40. Während des Betriebs des Absperrorgans 40 ist die das Druckstück 48 umgreifende Kupplungsbuchse 50 mittels des Federelements 54, das bspw. an dem Zwischenstück 44 angreift, zu dem Druckstück 48 festgelegt. Während des Betriebs des Absperrorgans 40 befinden sich die Verriegelungsschieber 60 in einem Verriegelungszustand, um das Verriegelungsglied 6 zu verriegeln. Die Kupplungsbuchse 50 überdeckt während des Betriebs des Absperrorgans den Außenmantel 102 des Druckstücks 48 im Bereich der Verriegelungsschieber 60.

Figur 7 zeigt den Teil des Absperrorgans 40 in der Öffnungsstellung. In der Öffnungsstellung ist die Antriebsstange 49 entgegen der Zustellrichtung 52 zurückgezogen. Entsprechend wird auch das Druckstück 48 zurückgezogen und öffnet über das Verriegelungsglied 6 das Absperrorgan 40, da in der Öffnungsstellung die Membran 4 von dem Ventilsitz entfernt wird bzw. ist.

Der Verriegelungsschieber 60 greift in dem Außendurchmesserrücksprung 8 an den ersten Anschlagbereich 12 an und zieht damit das Verriegelungsglied 6 und damit das ganze Verschlusselement 2 in eine Richtung entgegen der Zustellrichtung 52, um das Absperrorgan 40 zu öffnen. Damit ist der Außendurchmesserrücksprung 8 derart ausgebildet, dass in dem Öffnungszustand des Absperrorgans 40 eine Bewegung des Druckstücks 48 von dem Ventilsitz weg das Verriegelungsglied 6 auf die Membran 4 übertragbar ist. Ein oberer Anschlagbereich 108 des Zwischenstücks 44 definiert die in Figur 7 gezeigte obere Stellung, in der die Kupplungsbuchse 50 an dem Anschlagbereich 108 anliegt.

In einer weiteren Ausführungsform des Verschlusselements 2 kann der Außendurchmesserrücksprung 8 derart ausgebildet sein, dass in dem Öffnungszustand des Absperrorgans 2 eine Bewegung der Membran 4 von dem Ventilsitz weg entgegen der Zustellrichtung 52 über das Verriegelungsglied 6 auf das Druckstück 48 übertragbar ist. Hierzu kann der zweite Anschlagbereich 14 an dem ersten Ende 62 des Verriegelungselements 60 anliegen.

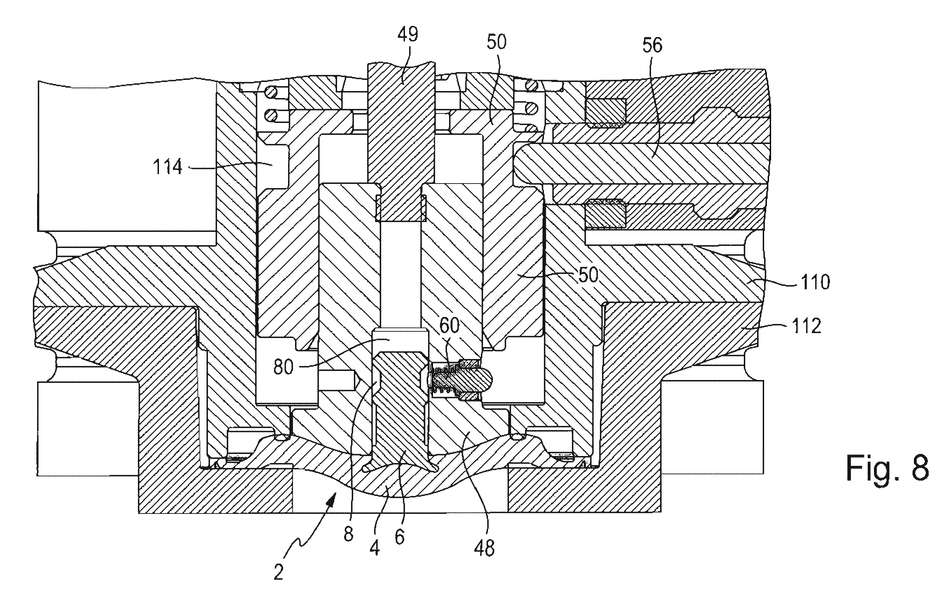

Figur 8 zeigt eine schematische Schnittansicht des Teils des Absperrorgans 40 in einem Entriegelungszustand während einer Montage. In den Entriegelungszustand gibt die Kupplungsbuchse 50 einen radial äußeren Bereich des Druckstücks 48 für den Verriegelungsschieber 60 frei, in den der Verriegelungsschieber 60 aufgrund der durch das Federelement 74 radial nach außen wirkenden Kraft eintaucht. Der Verriegelungsschieber 60 wird damit aus dem Außendurchmesserrücksprungs 8 des Verriegelungsglieds 6 und damit aus der Ausnehmung 80 herausbewegt. Zu einem Entfernen des Verschlusselements 2 wird eine Verklemmung der Membran 4 zwischen den Elementen 110 und 112 gelöst, womit das Verriegelungsglied 6 aus der Ausnehmung 80 des Druckstücks 48 entfernt werden kann. Anschließend kann ein neues Verschlusselement 2 wieder in die in Figur 8 gezeigte Position gebracht werden, in dem die Membran 4 des neuen Verschlusselements 2 zwischen den Elementen 110 und 112 eingeklemmt wird.

Während der Montage des Verschlusselements 2 wird mittels der Stange 48 die Kupplungsbuchse 50 zu dem Zwischenstück 44 festgelegt. Hierzu greift die Stange 48 in einer hierzu vorgesehene Ausnehmung 114 der Kupplungsbuchse 50, die im Wesentlichen rotationssymmetrisch zur Zustellachse 10 ausgebildet ist. Die mittels der Stange 48 festgelegte Kupplungsbuchse 50 gibt während der Montage den Außenmantel 102 des Druckstücks 48 im Bereich des Verriegelungsschiebers 60 frei.

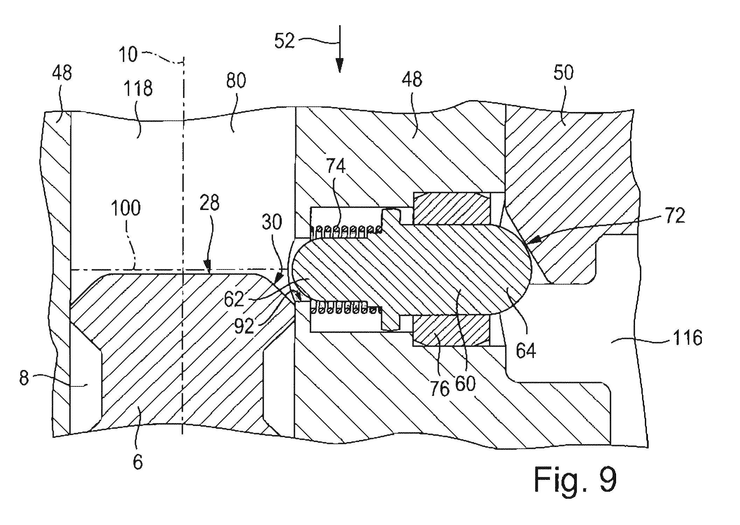

Figur 9 zeigt eine schematische Schnittansicht eines Teils des Absperrorgans 40 in einem Montageschritt. Das distale Ende 13 weist den kegelstumpfförmigen Einlaufbereich 30 auf, der in einer bevorzugten Ausführung während der Montage und während eines Betriebs von dem Verriegelungsschieber 60 nicht berührt wird. Hierzu ist das distale Ende 13 im Bereich des Einlaufbereichs 30 nicht zylinderförmig sondern kegelstumpfartig ausgebildet, was einer Ausnehmung entspricht, die einen Bereich für das erste Ende 62 des Verriegelungsschiebers 60 freilässt. Die Kupplungsbuchse 50 weist den Einlaufbereich 72 auf, der einen Bereich für das zweite Ende 64 des Verriegelungsschiebers freigibt. Eine Lagerung für den Verriegelungsschieber 60 ist derart ausgebildet, dass sich der Verriegelungsschieber 60 entlang der Verlagerungsachse 100 bewegen kann.

Während der Montage ist in dem in Figur 9 gezeigten Montageschritt die Kupplungsbuchse 50 zu dem Zwischenstück 44 festgelegt. Des Weiteren ist die Membran 4 zwischen den Elementen 110 und 112 eingeklemmt und damit zu dem Zwischenstück 44 ebenfalls festgelegt. Abhängig von der Flexibilität der Membran 4 und der Gewichtskraft, die auf das Verschlusselement 4 wirkt, befindet sich das Verriegelungsglied 6 an der in Figur 9 gezeigten Position. Die Distanz 16 des Außendurchmesserrücksprungs 8 erleichtert damit auch die Verriegelung, da mit der Distanz 16 ein Toleranzbereich für die Verriegelungsschieber 60 freigegeben wird. In dem in Figur 9 gezeigten Montageschritt wird das Druckstück 48 in Zustellrichtung 52 bewegt. Dadurch, dass das Federelement 64 den Verriegelungsschieber 60 bzgl. der Zustellachse 10 radial nach außen drückt, drückt das zweite Ende 64 im gezeigten Zustand auf den Einlaufbereich 72.

Gleichzeitig taucht das erste Ende 62 des Verriegelungsschiebers 60 in die Öffnung 92 ein. Bei einer weiteren Bewegung des Druckstücks 48 in Zustellrichtung 52 taucht der Verriegelungsschieber 60 in einen Außenraum 116 des Druckstücks 48 ein.

Damit sind das distale Ende 13 des Verriegelungsglieds 6, eine Innenfläche der Kupplungsbuchse 50 und eine Lagerung für den Verriegelungsschieber 60 derart aufeinander abgestimmt, so dass der Verriegelungsschieber 60 bei zum Zwischenstück 44 festgelegter Kupplungsbuchse 54 bei einer zum Zwischenstück 44 festgelegter Membran 4 des Verschlusselements 2 und bei in Zustellrichtung 52 bewegtem Druckstück 48 vor einem Berühren des distalen Endes 13 des Verriegelungsglieds 6 sich aus einem Innenraum 118 bzw. aus der Ausnehmung 80 zurückzieht und gleichzeitig und oder nachfolgend in den Außenraum 116 eintaucht.

Zu einer Montage eines neuen Verschlusselements wird der Antrieb in die geöffnete Position, wie in Figur 7 gezeigt, gefahren. In einem folgenden Schritt wird die Stange 48 der Kupplungsbuchse 50 zugeführt und die Kupplungsbuchse 50 damit zu dem Zwischenstück 44 festgelegt. Anschließend wird im Falle eines zu tauschenden Verschlusselements 2 das alte Verschlusselement 2 entfernt. Die Membran 4 des neuen Verschlusselements 2 wird bzgl. des Zwischenstücks 44 festgelegt und das Verriegelungselement 6 in die Ausnehmung 80 des Druckstücks 48 eingeführt. Anschließend wird das Druckstück 48 mittels der Antriebsstange 49 in die in Figur 8 gezeigte geschlossene Position gefahren, in der sich die Verlagerungsachse 100 im Bereich des Außendurchmesserrücksprungs 8 des Verriegelungsglieds 6 befindet. In einem folgenden Schritt kann die Arretiervorrichtung gelöst werden, d.h. die Stange 56 wird radial nach außen geführt, wodurch die Kupplungsbuchse 50 mittels Federkraft in die Zustellrichtung 52 bewegt wird. Die Kupplungsbuchse 50 trifft mittels Federkraft mit ihrem Einlaufbereich 72 auf das zweite Ende 64 und verlagert den/die Verriegelungsschieber 60 in die in den Außendurchmesserrücksprung 8 eingreifende Verriegelungsstellung.

## Patentansprüche

1. Absperrorgan (40) für Fluide mit einem Antrieb (42), einem Zwischenstück (44) und einem Ventilkörper (46), wobei in dem Zwischenstück (44) ein vom Antrieb (42) angetriebenes Druckstück (48) angeordnet ist, welches ein mit dem Ventilkörper (46) zusammenwirkendes Verschlusselement (2) bewegt, das ein in Richtung des Antriebs (42) abragendes Verriegelungsglied (6) aufweist, **dadurch gekennzeichnet, dass** das Druckstück (48) wenigstens zwei Verriegelungsschieber (60) aufweist, die mittels einer das Druckstück (48) umgreifenden Kupplungsbuchse (50) in eine das Verriegelungsglied (6) ergreifende Verriegelungsstellung verlagerbar sind.

2. Absperrorgan (40) nach dem Anspruch 1, wobei die Verriegelungsschieber (60) jeweils mittels eines an dem Druckstück (48) angreifenden Federelements (74) in eine das Verriegelungsglied (6) freigebende Entriegelungsstellung verlagerbar sind.

3. Absperrorgan (40) nach Anspruch 1 oder 2, wobei die das Druckstück (48) umgreifenden Kupplungsbuchse (50) während eines Betriebs des Absperrorgans (40), insbesondere mittels eines an Zwischenstück (44) des Absperrorgans (40) angreifenden Federelements (54), zu dem Druckstück (48) festgelegt ist, und wobei die Kupplungsbuchse (50) während Betriebs des Absperrorgans (40) einen Außenmantel (102) des Druckstücks (48) im Bereich der Verriegelungsschieber (60) überdeckt.

4. Absperrorgan (40) nach einem der Ansprüche 1 bis 3, wobei die das Druckstück (48) umgreifende Kupplungsbuchse (50) während einer Montage des Verschlusselements (2) mittels einer Arretiervorrichtung (56) zu dem Zwischenstück (44) festgelegt ist, und wobei die Kupplungsbuchse (50) während der Montage einen Außenmantel (102) des Druckstücks (48) im Bereich der Verriegelungsschieber (60) freigibt.

5. Absperrorgan (40) nach dem Anspruch 3, wobei die Verriegelungsschieber (60), ein distales Ende (13) des Verriegelungsglieds (6), eine Innenfläche (72) der Kupplungsbuchse (50) und eine Lagerung (100) für die Verriegelungsschieber (60) derart aufeinander abgestimmt sind, so dass bei zum Zwischenstück (44) festgelegter Kupplungsbuchse (50), bei einer zum Zwischenstück (44) festgelegter Membran (4) des Verschlusselements (2) und bei in Zustellrichtung (52) bewegtem Druckstück (48) die Verriegelungsschieber (60) vor einem Berühren des distalen Endes (13) des Verriegelungsglieds (6) sich aus einem Innenraum (118) des Druckstücks (48) zurückziehen und gleichzeitig und/oder nachfolgend in einen Außenraum (116) des Druckstücks (48) eintauchen.

6. Absperrorgan (40) nach einem der Ansprüche 2 bis 5, wobei die Verriegelungsschieber (60) orthogonal zur Zustellachse (10) in dem Druckstück (48) verliersicher gelagert sind, und wobei jeweils einer der Verriegelungsschieber (60) orthogonal zur Zustellachse (10) größer ist als eine Mantelstärke des Druckstücks (48) im Bereich des jeweiligen Verriegelungsschiebers (60).

7. Absperrorgan (40) nach einem der Ansprüche 1 bis 6, wobei das Verriegelungsglied (6) einen Außendurchmesserrücksprung (8) zur Aufnahme der Verriegelungsschieber (60) in ihrer Verriegelungsstellung aufweist.

8. Absperrorgan (40) nach dem Anspruch 7, wobei die Verriegelungsschieber (60) jeweils abgerundete Enden (62, 64) aufweisen, wobei Anschlagbereiche (12, 14) des Außendurchmesserrücksprungs (8) des Verriegelungsglieds (6) für das erste Ende (62) des jeweiligen Verriegelungsschiebers (60) jeweils aufeinander zulaufenden Kegelstumpfmantelaußenflächen entsprechen, und wobei ein Einlaufbereich (72) der Kupplungsbuchse (50) für das zweite Ende (64) des jeweiligen Verriegelungsschiebers (60) einer entgegen der Zustellrichtung (50) zulaufenden Kegelstumpfmantelinnenfläche entspricht.

9. Absperrorgan (40) nach einem der vorstehenden Ansprüche, wobei das Verschlusselement (2) eine Membran (4) umfasst, wobei das Verriegelungsglied (6) von der Membran (4) abragt, und wobei das Verriegelungsglied (6) einen Außendurchmesserrücksprung (8) aufweist, der derart ausgestaltet ist, so dass das Verschlusselement (2) mittels der dem Außendurchmesserrücksprung (8) im Wesentlichen orthogonal zur Zustellachse (10) zuführbaren Verriegelungsschieber (60) verriegelbar ist.

10. Absperrorgan (40) nach Anspruch 9, wobei das Verschlusselement (2), insbesondere der Außendurchmesserrücksprung (8), derart ausgebildet ist, so dass in einem Öffnungszustand des Absperrorgans (40) eine Bewegung eines Druckstücks (48) des Absperrorgans (40) von einem Ventilsitz des Absperrorgans (40) weg über das Verriegelungsglied (6) auf die Membran (4) übertragbar ist.

11. Absperrorgan (40) nach Anspruch 9 oder 10, wobei das Verschlusselement (2), insbesondere der Außendurchmesserrücksprung (8), derart ausgebildet ist, so dass in einem Schließzustand des Absperrorgans (8) eine Bewegung des Druckstücks (48) des Absperrorgans (40) hin zu dem Ventilsitz des Absperrorgans (40) im Wesentlichen nicht über das Verriegelungsglied (6) auf die Membran (4) übertragbar ist.

12. Absperrorgan (40) nach einem der Ansprüche 9 bis 11, wobei der Außendurchmesserrücksprung (8) zwei Anschlagbereiche (12, 14) für die Verriegelungsschieber (60) aufweist, die derart voneinander beabstandet sind, so dass in einem Verriegelungszustand das Verschlusselement (2) und das Druckstück (48) entlang einer Zustellachse (10) zueinander bewegbar sind.

13. Absperrorgan (40) nach einem der Ansprüche 9 bis 12, wobei der Außendurchmesserrücksprung (8) einen Innenführungsbereich (18) aufweist, der derart ausgestaltet ist, so dass in einem Verriegelungszustand das Verschlusselement (2) und das Druckstück (48) entlang einer Zustellachse (10) zueinander bewegbar sind.

14. Absperrorgan (40) nach einem der Ansprüche 9 bis 13, wobei das Verriegelungsglied (6) zwei voneinander beabstandete Außenführungsbereiche (20, 22) aufweist, die einen im Wesentlichen gleichen Außendurchmesser aufweisen.

15. Absperrorgan (40) nach dem einem der Ansprüche 9 bis 14, wobei der Außendurchmesserrücksprung (8) zwischen den zwei Führungsbereichen (20, 22) angeordnet ist.

16. Absperrorgan (40) nach einem der Ansprüche 10 bis 15, wobei der Außendurchmesserrücksprung (8) derart von der Membran (4) beabstandet ist, so dass die Verriegelungsschieber (60) in einem einem Anpressbereich (84) des Druckstücks (48) abgewandten Verriegelungsbereich (88) des Druckstücks (48) von radial außen mittels einer zumindest abschnittsweise über das Druckstück (48) führbaren Kupplungsbuchse (50) in eine in den Außendurchmesserrücksprung (8) eingreifende Verriegelungsstellung verlagerbar sind.

17. Absperrorgan (40) nach einem der vorstehenden Ansprüche, wobei der Außendurchmesserrücksprung (8) umlaufend nicht unterbrochen ist.

18. Absperrorgan (40) nach einem der Ansprüche 9 bis 17, wobei das Verriegelungsglied (8) aus einem Material, beispielsweise einem Metall, einer Metalllegierung oder einem Thermoplast, besteht, das bei einer Betriebstemperatur des Absperrorgans (40) im Wesentlichen nicht verformbar ist.

## Claims

1. A shut-off device (40) for fluids, having a drive (42), an intermediate piece (44) and a valve body (46), wherein a pressure piece (48) driven by the drive (42) is located in the intermediate piece (44) and moves a closure element (2) that cooperates with the valve body (46), which closure element has a locking member (6) projecting in the direction of the drive (42), **characterized in that** the pressure piece (48) has at least two locking slides (60), which are shiftable by means of a coupling bush (50) encompassing the pressure piece (48) into a locking position grasping the locking member (6).

2. The shut-off device (40) of claim 1, wherein the locking slides (60) are each shiftable by means of a spring element (74) engaging the pressure piece (48) into an unlocking position that releases the locking member (6).

3. The shut-off device (40) of claim 1 or 2, wherein the coupling bush (50) encompassing the pressure piece (48) is fixed to the pressure piece (48) during operation of the shut-off device (40), in particular by means of a spring element (54) engaging the intermediate piece (44) of the shut-off device (40), and wherein the coupling bush (50), during operation of the shut-off device (40), covers an outer jacket (102) of the pressure piece (48) in the vicinity of the locking slides (60).

4. The shut-off device (40) of one of claims 1 through 3, wherein the coupling bush (50) encompassing the pressure piece (48) is fixed to the intermediate piece (44) by means of a locking device (56) during an installation of the closure element (2), and wherein the coupling bush (50), during the installation, releases an outer jacket (102) of the pressure piece (48) in the vicinity of the locking slides (60).

5. The shut-off device (40) of claim 3, wherein the locking slides (60), a distal end (13) of the locking member (6), an inner jacket face (72) of the coupling bush (50), and a bearing (100) for the locking slides (60) are adapted to one another such that when the coupling bush (50) is fixed to the intermediate piece (44), when a diaphragm (4) of the closure element (2) is fixed to the intermediate piece (44) and when a pressure piece (48) is moved in the infeed direction (52), the locking slides (60), before touching the distal end (13) of the locking member (6), retract from an inner chamber (118) of the pressure piece (48) and simultaneously and/or subsequently dip into an outer chamber (116) of the pressure piece (48).

6. The shut-off device (40) of one of claims 2 through 5, wherein the locking slides (60) are supported in the pressure piece (48) orthogonally to the infeed axis (10) in a manner secure against being lost, and wherein each of the locking slides (60) orthogonally to the infeed axis (10) is larger than a jacket thickness of the pressure piece (48) in the vicinity of the respective locking slide (60).

7. The shut-off device (40) of one of claims 1 through 6, wherein the locking member (6) has a sudden change of an outer diameter recess (8) for receiving the locking slides (60) in their locking position.

8. The shut-off device (40) of claim 7, wherein the locking slides (60) each have rounded ends (62, 64), and stop regions (12, 14) of the outer diameter recess (8) of the locking member (6) for the first end (62) of the respective locking slide (60) each correspond to frustoconical outer jacket faces tapering toward one another, and wherein an inflow region (72) of the coupling bush (50) for the second end (64) of the respective locking slide (60) corresponds to a frustoconical inner jacket face tapering counter to the infeed direction (52).

9. The shut-off device (40) of one of the foregoing claims, wherein the closure element (2) includes a diaphragm (4), and the locking member (6) projects from the diaphragm (4), and the locking member (6) has an outer diameter recess (8), which is designed such that the closure element (2) is lockable by means of the locking slides (60) that can be delivered to the outer diameter recess (8) essentially orthogonally to the infeed axis (10).

10. The shut-off device (40) of claim 9, wherein the closure element (2), in particular the outer diameter recess (8), is embodied such that in an open state of the shut-off device (40), a movement of a pressure piece (48) of the shut-off device (40) away from a valve seat of the shut-off device (40) can be transmitted to the diaphragm (4) via the locking member (6).

11. The shut-off device (40) of claim 9 or 10, wherein the closure element (2), in particular the outer diameter recess (8), is embodied such that in a closed state of the shut-off device (40), a movement of the pressure piece (48) of the shut-off device (40) toward the valve seat of the shut-off device (40) essentially cannot be transmitted to the diaphragm (4) via the locking member (6).

12. The shut-off device (40) of one of claims 9 through 11, wherein the outer diameter recess (8) has two stop regions (12, 14) for the locking slides (60), which regions are spaced apart from one another such that in a locking state, the closure element (2) and the pressure piece (48) are movable toward one another along an infeed axis (10).

13. The shut-off device (40) of one of claims 9 through 12, wherein the outer diameter recess (8) has an inner guide region (18), which is designed such that in a locking state, the closure element (2) and the pressure piece (48) are movable toward one another along an infeed axis (10).

14. The shut-off device (40) of one of claims 9 through 13, wherein the locking member (6) has two outer guide regions (20, 22) spaced apart from one another, which have essentially the same outer diameter.

15. The shut-off device (40) of one of claims 9 through 14, wherein the outer diameter recess (8) is located between the two guide regions (20, 22).

16. The shut-off device (40) of one of claims 10 through 15, wherein the outer diameter recess (8) is spaced apart from the diaphragm (4) such that in a locking region (88) of the pressure piece (48) facing away from a contact-pressure region (84) of the pressure piece (48), the locking slides (60) are shiftable, by means of a coupling bush (50) that can be guided at least intermittently via the pressure piece (48), from radially outward into a locking position engaging the outer diameter recess (8).

17. The shut-off device (40) of one of the foregoing claims, wherein the outer diameter recess (8) is uninterrupted circumferentially.

18. The shut-off device (40) of one of claims 9 through 17, wherein the locking member (6) comprises a material, such as a metal, a metal alloy, or a thermoplastic, that is essentially nondeformable at an operating temperature of the shut-off device (40).

## Revendications

1. Organe d'arrêt (40) pour des fluides comprenant un entraînement (42), une pièce intermédiaire (44) et un corps de soupape (46), une pièce de poussée (48) entraînée par l'entraînement (42) étant agencée dans la pièce intermédiaire (44) et déplaçant un élément de fermeture (2) coopérant avec le corps de soupape (46), ledit élément comprenant un élément de verrouillage (6) faisant saillie en direction de l'entraînement (42), **caractérisé en ce que** la pièce de pression (48) comprend au moins deux coulisseaux de verrouillage (60), qui peuvent être déplacés au moyen d'un manchon d'accouplement (50) enserrant la pièce de pression (48) dans une position de verrouillage saisissant l'élément de verrouillage (6).

2. Organe d'arrêt (40) selon la revendication 1, les coulisseaux de verrouillage (60) pouvant être déplacés chacun dans une position de déverrouillage libérant l'élément de verrouillage (6) au moyen d'un élément ressort (74) agissant sur la pièce de pression (48).

3. Organe d'arrêt (40) selon la revendication 1 ou 2, le manchon d'accouplement (50) enserrant la pièce de pression (48), pendant un fonctionnement de l'organe d'arrêt (40), étant fixé par rapport à la pièce de pression (48), en particulier au moyen d'un élément ressort (54) agissant sur la pièce intermédiaire (44) de l'organe d'arrêt (40), et le manchon d'accouplement (50), pendant le fonctionnement de l'organe d'arrêt (40), recouvrant une enveloppe extérieure (102) de la pièce de pression (48) dans la zone des coulisseaux de verrouillage (60).

4. Organe d'arrêt (40) selon l'une quelconque des revendications 1 à 3, le manchon d'accouplement (50) enserrant la pièce de pression (48) étant fixé par rapport à la pièce intermédiaire (44) au moyen d'un dispositif de blocage (56) pendant un montage de l'élément de fermeture (2), et le manchon d'accouplement (50), pendant le montage, libérant une enveloppe extérieure (102) de la pièce de pression (48) dans la zone des coulisseaux de verrouillage (60).

5. Organe d'arrêt (40) selon la revendication 3, les coulisseaux de verrouillage (60), une extrémité distale (13) de l'élément de verrouillage (6), une surface intérieure (72) du manchon d'accouplement (50) et un support (100) pour les coulisseaux de verrouillage (60) étant adaptés les uns aux autres de telle manière que lorsque le manchon d'accouplement (50) est fixé par rapport à la pièce intermédiaire (44), lorsqu'une membrane (4) de l'élément de fermeture (2) est fixée par rapport à la pièce intermédiaire (44) et lorsque la pièce intermédiaire (48) est déplacée dans la direction d'avance (52), les coulisseaux de verrouillage (60), avant d'entrer en contact avec l'extrémité distale (13) de l'élément de verrouillage (6), se retirent d'un espace intérieur (118) de la pièce de pression (48) et s'enfoncent simultanément et/ou par la suite dans un espace extérieur (116) de la pièce de pression (48).

6. Organe d'arrêt (40) selon l'une quelconque des revendications 2 à 5, les coulisseaux de verrouillage (60) étant montés de manière imperdable dans la pièce de pression (48) perpendiculairement à l'axe d'avance (10), et respectivement un des coulisseaux de verrouillage (60) perpendiculairement à l'axe d'avance (10) étant plus grand qu'une épaisseur d'enveloppe de la pièce de pression (48) dans la zone du coulisseau de verrouillage (60) respectif.

7. Organe d'arrêt (40) selon l'une quelconque des revendications 1 à 6, l'élément de verrouillage (6) comprenant un renfoncement de diamètre extérieur (8) destiné à recevoir les coulisseaux de verrouillage (60) dans leur position de verrouillage.

8. Organe d'arrêt (40) selon la revendication 7, les coulisseaux de verrouillage (60) comprenant des extrémités (62, 64) respectivement arrondies, des zones de butée (12, 14) du renfoncement de diamètre extérieur (8) de l'élément de verrouillage (6) pour la première extrémité (62) du coulisseau de verrouillage (60) respectif correspondant à des surfaces extérieures tronconiques convergeant les unes vers les autres, et une zone d'entrée (72) du manchon d'accouplement (50) pour la deuxième extrémité (64) du coulisseau de verrouillage (60) respectif correspondant à une surface intérieure tronconique orientée à l'encontre de la direction d'avance (52).

9. Organe d'arrêt (40) selon l'une quelconque des revendications précédentes, l'élément de fermeture (2) comprenant une membrane (4), l'élément de verrouillage (6) faisant saillie de la membrane (4) et l'élément de verrouillage (6) comprenant un renfoncement de diamètre extérieur (8), qui est conçu de telle manière que l'élément de fermeture (2) peut être verrouillé au moyen des coulisseaux de verrouillage (60) pouvant être amenés au renfoncement de diamètre extérieur (8) sensiblement perpendiculairement à l'axe d'avance (10).

10. Organe d'arrêt (40) selon la revendication 9, l'élément de fermeture (2), en particulier le renfoncement de diamètre extérieur (8), étant réalisé de telle manière que, une fois l'organe d'arrêt (40) ouvert, un déplacement d'une pièce de pression (48) de l'organe d'arrêt (40) à distance d'un siège de soupape de l'organe d'arrêt (40) peut être transféré sur la membrane (4).

11. Organe d'arrêt (40) selon la revendication 9 ou 10, l'élément de fermeture (2), en particulier le renfoncement de diamètre extérieur (8), étant réalisé de telle manière que, une fois l'organe d'arrêt (8) fermé, un déplacement de la pièce de pression (48) de l'organe d'arrêt (40) en direction du siège de soupape de l'organe d'arrêt (40) ne peut être sensiblement transféré par l'intermédiaire de l'élément de verrouillage (6) sur la membrane (4).

12. Organe d'arrêt (40) selon l'une quelconque des revendications 9 à 11, le renfoncement de diamètre extérieur (8) comprenant deux zones de butée (12, 14) pour les coulisseaux de verrouillage (60), qui sont espacées l'une de l'autre de telle manière que, dans un état de verrouillage, l'élément de fermeture (2) et la pièce de pression (48) peuvent être déplacés l'un par rapport à l'autre le long d'un axe d'avance (10).

13. Organe d'arrêt (40) selon l'une quelconque des revendications 9 à 12, le renfoncement de diamètre extérieur (8) comprenant une zone de guidage intérieure (18) qui est configurée de telle manière que, dans un état de verrouillage, l'élément de fermeture (2) et la pièce de pression (48) peuvent être déplacés l'un par rapport à l'autre le long d'un axe d'avance (10).

14. Organe d'arrêt (40) selon l'une quelconque des revendications 9 à 13, l'élément de verrouillage (6) comprenant deux zones de guidage extérieures (20, 22) espacées l'une de l'autre, qui présentent un diamètre extérieur sensiblement identique.

15. Organe d'arrêt (40) selon l'une quelconque des revendications 9 à 14, le renfoncement de diamètre extérieur (8) étant agencé entre les deux zones de guidage (20, 22).

16. Organe d'arrêt (40) selon l'une quelconque des revendications 10 à 15, le renfoncement de diamètre extérieur (8) étant espacé de la membrane (4) de telle manière que les coulisseaux de verrouillage (60), dans une zone de verrouillage (88) de la pièce de pression (48) opposée à une zone de pression (84) de la pièce de pression (48), peuvent être déplacés depuis radialement vers l'extérieur, au moyen d'un manchon d'accouplement (50) pouvant être guidé au moins en partie par la pièce de pression (48), dans une position de verrouillage s'insérant dans le renfoncement de diamètre extérieur (8).

17. Organe d'arrêt (40) selon l'une quelconque des revendications précédentes, le renfoncement de diamètre extérieur (8) n'étant pas interrompu sur sa périphérie.

18. Organe d'arrêt (40) selon l'une quelconque des revendications 9 à 17, l'élément de verrouillage (6) étant constitué d'un matériau, par exemple d'un métal, d'un alliage métallique ou d'un thermoplaste, qui n'est sensiblement pas déformable à une température de fonctionnement de l'organe d'arrêt (40).
